# EUROPEAN PATENT SPECIFICATION

(11) **EP 2 196 336 B1**
(45) Date of publication and mention of the grant of the patent: **03.10.2012**
(21) Application number: 09178383.7
(22) Date of filing: 08.12.2009
(51) Int. Cl.: B60C 23/00

(54) **Tyre inflation pressure control system**
Drucksteuerungssystem zum Aufpumpen von Reifen
Système de contrôle de la pression de gonflage des pneus

(30) Priority: 11.12.2008 GB 0822561
(43) Date of publication of application: 16.06.2010
(73) Proprietor: AGCO GmbH, 87616 Marktoberdorf (DE)
(72) Inventor: Honzek, Robert, 87647, Uberthingau OT Oberthingau (DE); Dreher, Thorsten, 76549, Hügelsheim (DE)
(74) Representative: Morrall, Roger

(56) References cited:
- EP-A1- 0 621 144
- US-A- 4 067 376
- US-A1- 2002 059 972
- US-A1- 2005 081 973
- US-A1- 2006 201 598

## Description

The invention relates to a tyre inflation pressure control system comprising a vehicle wheel having a rim with a tyre mounted thereon and an air reservoir, the system further comprising a decant valve for allowing air to transfer from the reservoir into the tyre, a deflate valve for deflating the tyre, a valve control unit fixed relative to the wheel and a controller fixed relative to the vehicle and which can communicate with the valve control unit.

The inflation pressure of vehicle tyres is known to be a contributory factor in the tyre wear, the grip provided by the tyre and the fuel consumption of the vehicle. By reducing the pressure of the tyre the contact surface with the ground is increased thereby improving the grip and which allows a greater power to be transmitted between the vehicle and the ground. This is particularly advantageous in slippery conditions caused by ice or mud for example. Furthermore, when utility vehicles such as tractors operate in wet fields, the power which can be transmitted to the ground is limited and this can be increased by reducing the tyre pressure.

However an increase in contact surface results in an increase in tyre wear and, as is particularly apparent on hard surfaces at speed, an increase in fuel consumption. Therefore it is recognised that optimum performance of the vehicle is achieved with different tyre inflation pressures for different operating conditions. This has led to the development of automatic inflation and deflation arrangements which allow the tyre inflation pressure to be changed during operation to optimise the driving characteristics described above.

German Utility Model DE 29718420 U1 describes a tyre pressure control system wherein a wheel comprises an integrated compressed air reservoir located on the rim and surrounded by the tyre. Air is transferred from the reservoir to the tyre by means of a valve so as to inflate the tyre when required. The tyre is deflated via the same valve by transferring air to the environment. A control device is also located between the rim and the tyre and serves to control the valve means thereby inflating and deflating the tyre. The tyre pressure is maintained at a set point by the control device automatically activating the valve means in response to a measured distance between the rim and the tyre. The disclosed system does not allow active control of the tyre pressure and serves merely to maintain the pressure at a predetermined value.

US2005/081973 dislcoses a tyre inflation pressure control system comprising a vehicle wheel having a tyre and a rim and an air reservoir. The system has a decant valve for allowing air to transfer from the reservoir into the tyre, a deflation valve, a valve control unit fixed relative to the wheel and a controller adapted to be fixed relative to the vehicle and which can communicate with said valve control unit, according to the preamble of claim 1.

United States patent application published as US-2005/0081973 describes a wheel assembly having a tyre mounted upon a rim. A reservoir disposed on the wheel stores gas under pressure for inflating the tyre. A solenoid valve provides a connection between the reservoir and the closed space of the tyre for inflating the tyre. A further solenoid valve provides a connection between the closed space and the atmosphere for deflating the tyre. A data processor which does not rotate with the rim communicates with a controller which does rotate with the rim. The controller feeds electrical signals to the solenoid valves to make them switch.

There is a desire to reduce the power consumption of the valve controller which rotates with the wheel, especially when a local power supply is employed such as a battery fixed relative to the wheel. Achieving access to the battery for replacement thereof can be difficult and time consuming.

In accordance with the invention there is provided a tyre inflation pressure control system comprising a tyre inflation pressure control system comprising a vehicle wheel having a rim with a tyre mounted thereon and an air reservoir, the system further comprising a decant valve for allowing air to transfer from the reservoir into the tyre, a deflate valve for controlling the tyre, a valve control unit fixed relative to the wheel and a controller adapted to be fixed relative to the vehicle and which can communicate with the valve control unit, characterised in that said decant and/or deflate valve is a check valve and in that the system further comprises a piezoelectric controlled valve in communication with said valve control unit, via which piezoelectric controlled valve a pilot pressure can be applied to said decant and/or deflate valve being adapted to be opened by said pilot pressure sourced from said air reservoir. Advantageously, by using piezoelectric valves to preselect the decant and/or deflate valves the energy consumption is reduced because the valve required to regulate a pilot pressure is smaller than the directional control valve employed in DE29718420 or the solenoid valves employed in the system of US-2005/0081973 for example.

In a preferred arrangement the controller can communicate wirelessly with the valve control unit. By providing a wireless link between the valve control unit and the controller the tyre inflation pressure can be actively controlled by a driver or automatically by the vehicle control system. Therefore control of the tyre inflation pressure can be integrated with other controls of the vehicle.

The inclusion of the air reservoir on the vehicle wheel allows any adjustment in the tyre pressure to be swift wherein the pressure in the air reservoir is significantly greater than the tyre pressure. Preferably the air reservoir is located within the tyre volume and is preferably toroidal toroidal in shape and mounted to the rim thereby remaining within the conventional profile of the wheel. The air reservoir is preferably of a substantially fixed volume which may be provided by forming the reservoir of rubber material which is preferably reinforced. By fixing the volume of the air reservoir and forming it within the volume of the tyre the effective inflatable volume of the tyre is reduced thereby decreasing the time taken to adjust the inflation pressure.

The system preferably further comprises a pressure sensor in each of the tyre volume and the reservoir volume wherein each pressure sensor is in communication with the valve control unit by a wired link for example. This allows continuous monitoring of the two chambers comprising pressurised air. The pressure information can be fed wirelessly to the controller to facilitate active management of the tyre inflation pressure.

The system may further comprise an air pressure source associated with the vehicle and from which air is transferred to the reservoir via a valve which is in communication with the controller. In this arrangement the reservoir can be maintained at an operating pressure by pumping air from a pressure source located on the vehicle chassis for example. Preferably the air is transferred to the reservoir via a rotary transfer arrangement which is associated with a wheel mounting hub. The air pressure source may be provided by an air pump located on the vehicle which may also supply air to a brake system for example. Due to the presence of the reservoir on the wheel, advantageously only a single pipe is required between the vehicle and the wheel via the rotary transfer arrangement.

The valve control unit associated with the wheel is preferably powered by a battery which is fixed relative to the wheel, for example in the volume defined by the tyre. In the case where piezoelectric valves are employed the power consumption of the battery is reduced thereby demanding a lower battery capacity. However when in a closed system with no electrical connections beyond the wheel assembly the battery is preferably recharged by a generator module which exploits the kinetic energy available within the apparatus. The generator module may comprise an air turbine which is also fixed relative to the wheel. In a first arrangement the turbine may be driven by air exiting the tyre during deflation via the deflate valve. Advantageously this exploits the kinetic energy of air which would otherwise be expelled unimpeded to the environment.

In a second arrangement the turbine is driven by air exiting the reservoir. In this case the system preferably further comprises a recharge valve which allows air to transfer from the reservoir to the environment via the turbine, the recharge valve being a check valve which is opened by a pilot pressure sourced from the reservoir and applied via a piezoelectric valve which is in communication with the valve control unit. Advantageously this arrangement exploits the potential energy within the pressurised reservoir and can be employed to recharge the battery upon demand and does not rely on deflation of the tyre. Preferably the stored energy in the battery is monitored and the recharge valve is operated automatically in response to the energy falling below a predetermined threshold.

In a third arrangement the turbine is driven by air being transferred to the reservoir. In the case where the system comprises an air pressure source associated with the vehicle, then the turbine may be connected between the source and the reservoir so as to charge the battery whenever air is transferred across the interface between the vehicle and the wheel. This composition advantageously requires no additional recharge valve. In addition, the charging of the battery can be provided independent from decant/inflate process.

In an alternative arrangement the generator module may comprise a dynamo which is driven by the rotation of the wheel and is arranged to recharge the battery.

The invention is particularly beneficial when applied to a tractor which operates in conditions which vary widely and frequently.

Further advantages of the invention will become apparent from the following description of specific embodiments with reference to the drawings in which:-
- Figure 1: is a schematic diagram of a tyre inflation pressure control system in accordance with a first embodiment of the invention;
- Figure 2: is a schematic diagram of a tyre inflation pressure control system in accordance with a second embodiment of the invention;
- Figure 3: is a schematic diagram of a tyre inflation pressure control system in accordance with a third embodiment of the invention; and
- Figure 4: is a schematic diagram of a tyre inflation pressure control system in accordance with a fourth embodiment of the invention.

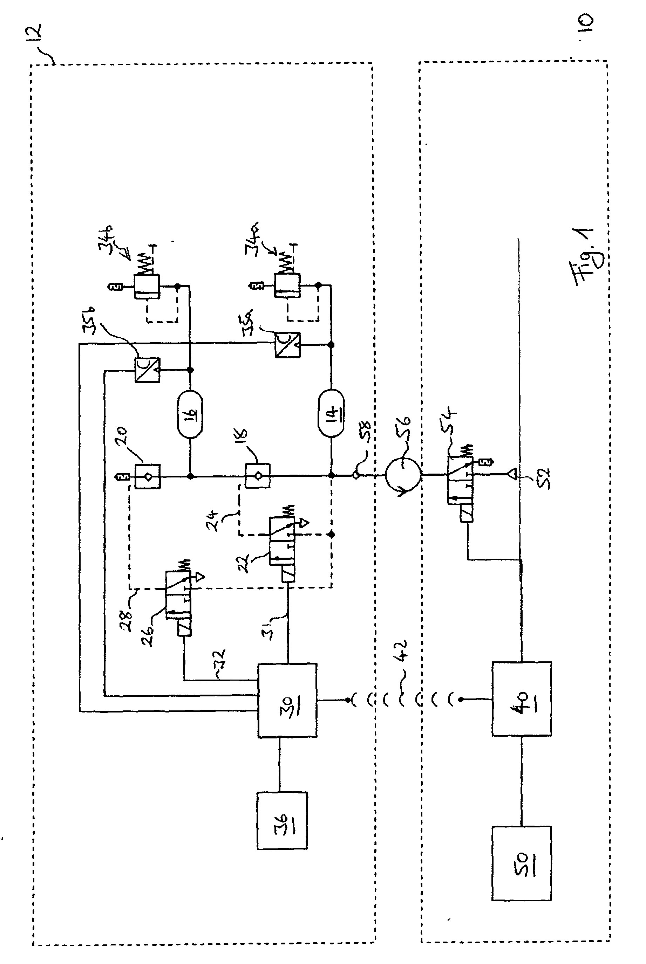

In accordance with a first embodiment of the invention a tractor comprises a chassis designated generally at 10 and a wheel designated generally at 12. It should be understood that Figure 1 is highly schematic and features located within dashed box 10 are located anywhere on the tractor whereas those features within dashed box 12 are integrated with the wheel and rotate therewith. Furthermore the tractor comprises at least four wheels wherein two or maybe four have the same construction as described below with reference to wheel 12.

The wheel 12 comprises a generally cylindrical rim (not shown) upon which a tubeless tyre is mounted. A toroidal air reservoir 14 formed of reinforced rubber is disposed on the wheel rim within the volume defined by the tyre. Therefore the air reservoir forms an inner chamber 14 of pressurised air and the tyre forms an outer chamber 16. The volume of the air reservoir 14 is substantially fixed due to the reinforcement of the rubber material. Therefore deformation of the material between the air reservoir and the tyre volume does not occur when significant pressure differences arise between the chambers 14,16.

The volume of air reservoir 14 is in the region of 320 litres and the inflatable volume of tyre 16 is in the region of 490 litres. The maximum operating pressure of the air reservoir is around 6 bar whereas the operating pressure of the tyre 16 typically varies between 0.8 and 2 bar.

It should be appreciated that for trailers (e.g. muck trailers) this maximum tyre pressure is around 4 bar and that different vehicles require different inflation pressures.

The system comprises a decant valve 18 and a deflate valve 20 each of which is a pilot controlled check valve. Decant valve 18 is located in a fluid transfer line between the air reservoir 14 and tyre 16. Deflate valve 20 is located in a fluid transfer line between the tyre 16 and the environment.

Each check valve 18, 20 has associated therewith a piezoelectric control valve. A first piezoelectric valve 22 controls the delivery of a pilot pressure taken from air reservoir 14 to decant valve 18 via pilot line 24. A second piezoelectric control valve 26 controls the delivery of a pilot pressure also from air reservoir 14 to the deflate valve 20 via pilot line 28. Each piezoelectric valve 22, 26 is activated by a valve control unit 30 employing electrical signals sent via respective lines 31,32.

The significantly larger pressure of air reservoir 14 keeps decant valve 18 in a closed position in normal operation. By activation of piezoelectric valve 22 a pilot pressure opens decant valve 18 and allows air to transfer into tyre volume 16 thus increasing the pressure therein.

During normal operation the pressure within tyre 16 maintains deflate valve 20 in the closed position. Upon activation of piezoelectric valve 26 a pilot pressure forces deflate valve into an open position thereby allowing air to exit tyre volume 16 thus causing a reduction in the pressure thereof.

Each chamber 14,16 comprises a respective pressure relief valve 34a,34b which can be preset to relieve the pressure within the respective chamber when it exceeds a predetermined value.

Furthermore each chamber 14,16 has associated therewith a pressure sensor 35a,35b each with a respective wired link to valve control unit 30. Each pressure sensor 35a,35b senses the pressure in the associated volume and transmits this information to the valve control unit 30.

A rechargeable battery 36 is arranged within the wheel assembly 12 so as to power the valve control unit 30. However, in an alternative arrangement, the battery may be replaced with a capacitor which can deliver a high current and be charged over a short period. Apparatus to charge the battery 36 will be described in more detail below.

The pressure control system further comprises a controller 40 located on the tractor chassis 10. The controller 40 is in wireless and bidirectional communication with valve control unit 30 in accordance with the invention by a wireless link. The controller 40 is also in communication with a tractor management system 50 which serves to monitor and control various operating parameters of the tractor such as speed, wheel slip and transmission ratio for example.

An air pressure source 52 is provided by an air pump which is located on the tractor. The air source 52 can supply pressurised air via an electric valve 54 and a rotary transfer arrangement 56 and check valve 58 to the reservoir 14. The valve 54 is controlled via a wired link by the controller 40. The rotary transfer arrangement 56 is of a known construction such as that disclosed in US-6,439,044 by way of example only. This allows pressurised air to be transferred from the chassis 10 to the rotating wheel assembly 12.

An example sequence of operation will now be described with reference to Figure 1. The pressures within reservoir 14 and tyre 16 are sensed by pressure sensors 35a,35b and communicated to tractor management system 50 via valve control unit 30, wireless link 42 and controller 40. This information may be displayed to the driver. Commands from the driver are entered into the tractor management system 50 via a user interface (not shown).

Commands are then communicated to controller 40 which then passes the command to valve control unit 30 via wireless link 42.

The target pressure is stored locally on the wheel by the valve control unit 30. This value is updated by the controller 40 via the wireless link periodically and/or when a change demand occurs.

In the case of the sensed pressure being below the target pressure, valve control unit 30 activates piezoelectric valve 26 by an electric signal sent by line 32. Piezoelectric valve 26 is activated for a predetermined duration of say 5 seconds which causes deflate valve 20 to open thereby reducing the pressure in tyre 16. The pressure sensed in tyre 16 is then compared to the commanded pressure and, if further deflation is required, piezoelectric valve 26 is activated for another period.

It should be understood that the duration at which the piezoelectric valves 22,26 are activated may be determined by an algorithm which takes into account the existing pressure in chambers 14,16 and the target pressure of tyre 16. Alternatively, real time adjustment may be employed to set the inflation pressure at the desired value by constant measuring of the pressure in combination with control of the decant process.

During operation valve control unit 30 continually monitors the pressure within tyre 16 and compares it to the target pressure and activate the piezoelectric valves 22,26 accordingly.

The above described control and monitoring of the inflation pressure is executed on a local basis at the wheel by the valve control unit 30. By only updating the target pressure when a change is required (either demanded manually by the driver or automatically via the management system 50) the number of messages passing over the wireless link 42 is minimised. Advantageously this reduces the energy consumption of the battery 36 and avoids unreliable control caused by discontinuities in the wireless connection 42.

It is envisaged, however, that control and monitoring of the inflation pressure may be done instead by the controller 40 via wireless link 42 wherein valve control unit 30 simply serves to pass on the sensed parameters and control the valves 22, 26 as demanded. The target inflation pressure in this case is stored by the controller 40 or management system 50.

In the case where the sensed pressure within air reservoir 14 drops below a predetermined threshold, valve control unit 30 commands a top-up action to controller 40 via wireless link 42. Such a command triggers activation of piezoelectric valve 54 which transfers air under pressure from air source 52 to air reservoir 14 until the target pressure is obtained.

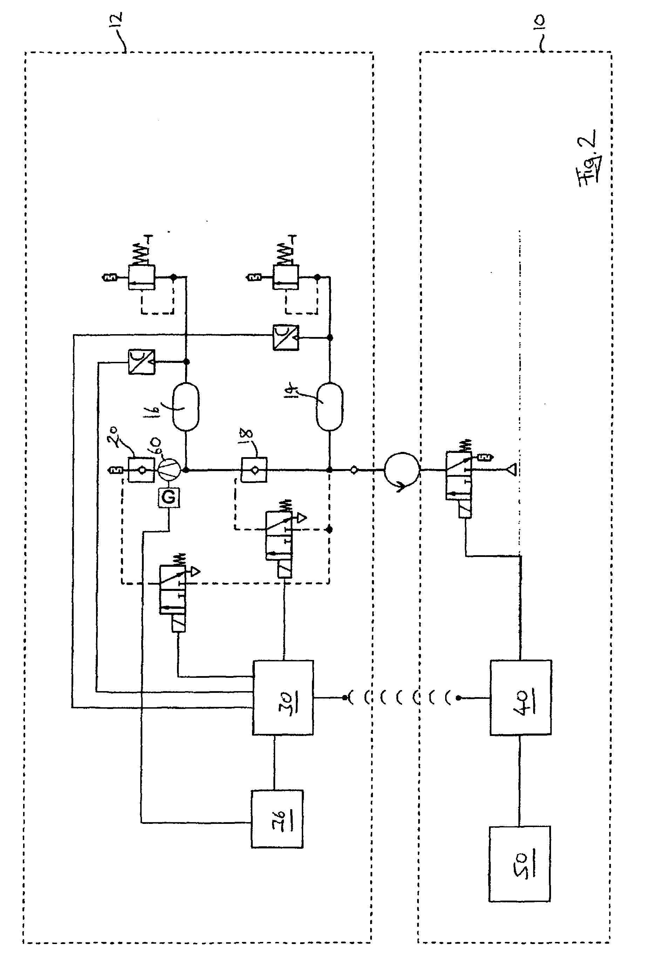

With reference to Figure 2, a generator module is provided to recharge the battery 36 by exploiting the available energy of the pressurised air in the fluid system. A turbine 60 is disposed in the air stream of the air which is expelled upon deflation from tyre 16. The turbine 60 powers generator G which serves to recharge battery 36 thereby increasing the lifetime thereof.

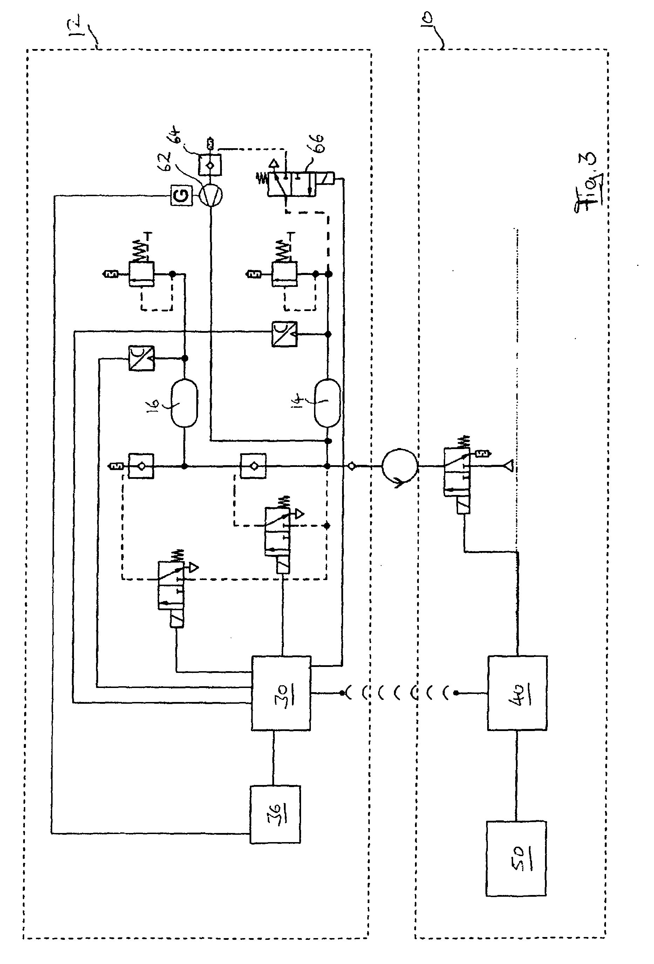

In an alternative arrangement shown in Figure 3, a turbine 62 is located in a dedicate air stream between the reservoir 14 and the environment. A check valve 64 regulates the expulsion of air through the turbine 62 and is opened by a pilot pressure sourced from the reservoir 14 and applied via a piezoelectric valve 66 which is in communication with the valve control unit 30. In this arrangement the valve control unit 30 can activate valve 66 when the electrical energy in the battery 36 is sensed to be below a predetermined threshold. Therefore generator G can be activated upon demand and does not rely on a deflation step as per the embodiment of Figure 2.

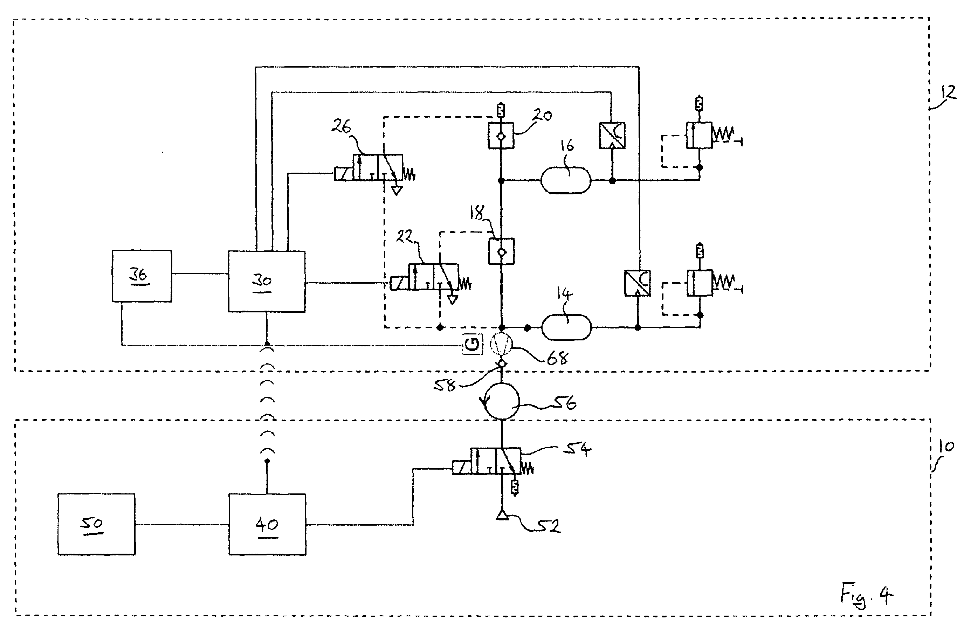

In yet another alternative arrangement shown in Figure 4, a turbine 68 is connected in the air stream between the rotary transfer arrangement 56 and the reservoir 14. In a similar manner to that of Figures 2 and 3, the turbine 68 powers a generator G which serves to recharge battery 36. However, in this case, the turbine 68 is driven each occasion air is transferred from the vehicle air supply 52 to the reservoir 14. Furthermore, there is no requirement for further valves to direct airflow through the turbine. In addition, the charging of the battery can be provided independent from decant/inflate process. The presence of the pressure relief valve 34a associated with reservoir 14, allows air to be transferred from the vehicle 10 to the reservoir 14 whenever a charging of the battery 36 is required and without affecting the other parts of the system.

In a further alternative (not shown), the turbine may be replaced by a dynamo which is driven by the mechanical rotation of wheel 12.

In summary there is provided a tyre inflation pressure control system comprising a vehicle wheel having a rim with a tyre mounted thereon and an air reservoir. The system further comprises a decant valve for allowing air to transfer from the reservoir into the tyre and a deflate valve for deflating the tyre. A valve control unit fixed relative to the wheel is in communication with a controller which is fixed relative to the vehicle. By providing a highpressure reservoir on the wheel assembly and means to control the associated distribution valves remotely, only a single feed through connection is required for air supply from the vehicle. The decant and/or the deflate valve is a check valve which is opened by a pilot pressure sourced from the reservoir. The pilot pressure is applied to the decant and/or deflate valve via a respective piezoelectric controlled valve which are in communication with the valve control unit.

## Claims

1. A tyre inflation pressure control system comprising a vehicle wheel 12 having a rim with a tyre mounted thereon and an air reservoir 14, the system further comprising a decant valve 18 for allowing air to transfer from the reservoir 14 into the tyre, a deflate valve 20 for deflating the tyre, a valve control unit 30 fixed relative to the wheel and a controller 40 adapted to be fixed relative to the vehicle and which can communicate with the valve control unit 30, **characterised in that** said decant and/or deflate valve 18, 20 is a check valve and **in that** the system further comprises a piezoelectric controlled valve 22, 26 in communication with said valve control unit 30, via which piezoelectric controlled valve 22, 26 a pilot pressure can be applied to said decant and/or deflate valve 18, 20 being adapted to be opened by said pilot pressure sourced from said air reservoir 14.

2. A control system according to Claim 1, wherein the controller 40 can communicate wirelessly with the valve control unit 30.

3. A control system according to Claim 1 or 2, wherein the air reservoir 14 is located within the tyre.

4. A control system according to any preceding claim, further comprising a pressure sensor 35a, 35b in each of the tyre and the reservoir 14 and each being in communication with the valve control unit 30.

5. A control system according to any preceding claim, wherein the valve control unit 30 is powered by a battery 36 or capacitor fixed relative to the wheel.

6. A control system according to Claim 5, wherein the battery 36 or capacitor is recharged by a generator module comprising an air turbine 60 fixed relative to the wheel 12.

7. A control system according to Claim 6, wherein the turbine 60 is driven by air exiting the tyre during deflation via the deflate valve 20.

8. A control system according to Claim 6, wherein the turbine 60 is driven by air exiting the reservoir 14.

9. A control system according to Claim 8, further comprising a recharge valve 64 which allows air to transfer from the reservoir to the environment via the turbine, the recharge valve 64 being a check valve which is opened by a pilot pressure sourced from the reservoir 14 and applied via a piezoelectric valve 60 which is in communication with the valve control unit 30.

10. A control system according to Claim 9, wherein the stored energy in the battery 36 or capacitor is monitored and the recharge valve 64 is operated automatically in response to the energy falling below a predetermined threshold.

11. A control system according to Claim 6, further comprising a dynamo driven by the rotation of the wheel 12 and arranged to recharge the battery 36 or capacitor.

12. A control system according to any preceding claim, further comprising an air pressure source associated with the vehicle and from which air is transferred to the reservoir 14 via a valve which is in communication with the controller.

13. A control system according to Claim 12, wherein the air is transferred to the reservoir 14 via a rotary transfer arrangement associated with a wheel mounting hub.

14. A control system according to Claim 12 or 13 when dependent upon Claim 6, wherein the turbine 60 is driven by the air being transferred to the reservoir 14.

15. A tractor comprising a control system according to any preceding claim.

## Patentansprüche

1. Steuerungs- oder Regelungssystem (im Folgenden "Steuerung..") für den Aufblasdruck eines Reifens mit einem Fahrzeugrad (12), welches in Felge mit darauf montiertem Reifen besitzt, einem Behälter (14) für Luft, einem Umfüllventil (18) für eine Ermöglichung eines Transfers von Luft von dem Behälter (14) in den Reifen, einem Ablassventil (20) zum Ablassen von Luft aus dem Reifen, einer Ventilsteuereinheit (30), die relativ zu dem fixiert ist, und einem Controller (40), der geeignet gestaltet ist, um relativ zu dem Fahrzeug fixiert zu werden, und der mit der Ventilsteuereinheit (30) kommunizieren kann, **dadurch gekennzeichnet, dass** das Umfüllventil (18) und/oder das Ablassventil (20) ein Rückschlagventil ist und das System ein piezoelektrisch gesteuertes Ventil (22,26) aufweist, welches mit der Ventilsteuereinheit (30) kommuniziert, wobei über das mindestens eine piezoelektrisch gesteuerte Ventil (22, 26) ein Steuerdruck auf das Umfüllventil (18) und/oder das Ablassventil (20), das oder die geeignet ist/sind, um durch den Steuerdruck, der dem Behälter (14) entstammt, geöffnet zu werden, aufgebracht werden kann.

2. Steuersystem nach Anspruch 1, **dadurch gekennzeichnet**, des Controller (40) drahtlos mit der Ventilsteuereinheit (30) kommunizieren kann.

3. Steuersystem nach Anspruch 1 oder 2, **dadurch gekennzeichnet, dass** der Behälter (14) in dem Reifen angeordnet ist.

4. Steuersystem nach einem der vorhergehenden Ansprüche, **gekennzeichnet durch**, einen Drucksensor (35a, 35b) sowohl in dem Reifen als auch in dem Behälter (14), die jeweils mit der Ventilsteuereinheit 30 kommunizieren.

5. Steuersystem nach einem der vorhergehenden Ansprüche, **dadurch gekennzeichnet, dass** die Ventilsteuereinheit (30) durch eine Batterie (36) oder eine Kapazität, die relativ zu dem Rad fixiert ist, betrieben oder mit Leistung versorgt wird.

6. Steuersystem nach Anspruch 5, **dadurch gekennzeichnet, dass** die Batterie (36) oder die Kapazität durch ein Generatormodul, welches eine Luftturbine (60) aufweist, die gegenüber dem (12) fixiert ist, wiederaufgeladen wird.

7. Steuersystem nach Anspruch 6, **dadurch gekennzeichnet, dass** die Turbine (60) durch Luft angetrieben wird, die während des Ablassens von Luft über das Ablassventil (20) aus dem Reifen austritt.

8. Steuersystem nach Anspruch 6, **dadurch gekennzeichnet, dass** die Turbine (60) durch Luft angetrieben wird, die aus dem Behälter (14) austritt.

9. Steuersystem nach Anspruch 8, **dadurch gekennzeichnet, dass** ein Ventil (46) zum Wiederaufladen vorhanden ist, welches ermöglicht, dass Luft von dem Behälter über die Turbine in die Umgebung übertritt, wobei das Ventil (64) zum Wiederaufladen ein Rückschlagventil ist, welches durch einen Steuerdruck wird, der dem Behälter (14) entstammt und über ein piezoelektrisches Ventil (60), welches mit der Ventilsteuereinheit (30) kommuniziert, aufgebracht wird.

10. Steuersystem nach Anspruch 9, **dadurch gekennzeichnet, dass** die in der Batterie (36) oder der Kapazität gespeicherte Energie überwacht wird und dass das Ventil (64) zum Wiederaufladen in Abhängigkeit davon, dass die Energie unter einen vorbestimmten Schwellwert fällt, automatisch betrieben oder betätigt wird.

11. Steuersystem nach Anspruch 6, **dadurch gekennzeichnet, dass** ein Dynamo vorhanden ist, der durch die Rotation des Rads (12) angetrieben wird und geeignet angeordnet oder ausgebildet ist, um die Batterie (36) oder die Kapazität wiederaufzuladen.

12. Steuersystem nach einem der vorhergehenden Ansprüche, **dadurch gekennzeichnet, dass** eine Druckluftquelle vorhanden ist, die dem Fahrzeug zugeordnet ist und von der Luft au dem Behälter (14) über ein Ventil, welches mit dem Controller kommuniziert, übertritt.

13. Steuersystem nach Anspruch 12, **dadurch gekennzeichnet, dass** die Luft an den Behälter (14) über eine rotierende Übertragungsanordnung, welche der Radbefestigungsnarbe zugeordnet ist, übertragen wird.

14. Steuersystem nach Anspruch 12 oder 13 in Rückbeziehunga auf Anspruch 6, **dadurch gekennzeichnet, dass** die Turbine (60) durch Luft angetrieben wird, die zu dem Behälter (14) übertragen wird.

15. Zugfahrzeug oder Traktor mit einem Steuersystem nach einem der vorhergehenden Ansprüche.

## Revendications

1. Dispositif de commande de pression de gonflage de pneu comprenant une roue de véhicule (12) comportant une jante avec un pneu monté dessus et un réservoir d'air (14), le dispositif comprenant, en outre, une vanne de transvasement (18) destinée à assurer le transfert de l'air du réservoir (14) vers le pneu, une de dégonflage (20) destinée à dégonfler le pneu, une unité de commande de vanne (30) fixée par rapport à la roue et un régisseur (40) adapté de manière à être fixé par rapport au véhicule et qui peut communiquer avec l'unité de commande de vanne (30), **caractérisé en ce que** ladite vanne de transvasement et/ou de dégonflage (18, 20) est un clapet antiretour et **en ce que** le Dispositif comprend, en outre, une vanne de commande piézo-électrique (22, 26) en communication avec ladite unité de commande de vanne (30), par l'intermédiaire de laquelle vanne de commande piézo-électrique (22, 26) une pression pilote peut être appliquée sur ladite vanne de transvasement et/ou de dégonflage (18, 20) de manière à être ouverte par ladite pression pilote issue dudit réservoir d'air (14).

2. Dispositif de commande selon la revendication 1, dans lequel le régisseur (40) peut communiquer à distance avec l'unité de commande de vanne (30).

3. Dispositif de commande selon la revendication 1 ou 2, dans lequel le réservoir d'air (14) est situé à l'intérieur du pneu.

4. Dispositif de commande selon l'une des revendication précédentes, comprenant, en outre, un capteur de pression (35a, 35b) dans chacun du pneu et du réservoir (14) et chacun d'eux étant en communication avec l'unité de commande de vanne (30).

5. Dispositif de commande selon l'une quelconque des revendications précédentes, dans lequel l'unité de commande de vanne (30) est alimentée par une batterie (36) ou un condensateur fixé par rapport à la roue.

6. Dispositif de commande selon la revendication 5, dans lequel la batterie (36) ou le condensateur est rechargé par un module générateur comprenant une Turbine à air (60) fixée par rapport à la roue (12).

7. Dispositif de commande selon la revendication 6, dans lequel la turbine (60) est entraînée par de l'air sortant du pneu au cours du dégonflage par l'intermédiaire de la vanne de dégonflage (20).

8. dispositif commande selon la revendication 6, dans lequel la turbine (60) est entraînée par l'air sortant du réservoir (14).

9. Dispositif de commande selon la revendication 8, comprenant, en outre, une vanne de recharge (64) qui permet de transférer de l'air du réservoir à l'environnement par l'intermédiaire de la turbine, la vanne de recharge (64) étant un clapet antiretour qui est ouvert par une pression pilote issue du réservoir (14) et appliquée par l'intermédiaire d'une vanne piézo-électrique (60) qui est en communication avec l'unité de commande de vanne (30).

10. Dispositif de commande selon la revendication 9, dans lequel l'énergie stockée dans la batterie (36) ou le condensateur est contrôlée et la vanne de recharge (64) est commandée automatiquement en réponse à la chute du niveau d'énergie au-dessous d'un seuil prédéterminé.

11. Dispositif de commande selon la revendication 6, comprenant, en outre, une dynamo entraînée par la rotation de la roue (12) et agencée de manière à recharger la batterie (36) ou le condensateur.

12. Dispositif de commande selon l'une quelconque des revendications précédentes, comprenant, en outre, une source de pression d'air associée au véhicule et à partir de laquelle de l'air est transféré au réservoir (14) par l'intermédiaire d'une vanne qui est en communication avec le régisseur.

13. Dispositif de commande selon la revendication 12, dans lequel l'air est transféré a réservoir (14) par l'intermédiaire d'un agencement de transfert rotatif associé à un moyeu de montage de roue.

14. Dispositif de commande selon la revendication 12 ou 13 lorsqu'elle dépend de la revendication 6, dans lequel la turbine (60) est entraînée par l'air transféré vers le réservoir (14).

15. Tracteur comprenant un dispositif de commande selon l'une quelconque des revendications précédentes.
